## Europäisches Patentamt

(19) **European Patent Office**

**Office européen des brevets**

(11) Veröffentlichungsnummer: **0 233 174**
**B1**

(12) # EUROPÄISCHE PATENTSCHRIFT

(45) Veröffentlichungstag der Patentschrift:
24.10.90

(51) Int. Cl.⁵: **F04D 17/04**, F01P 5/06

(21) Anmeldenummer: **87890022.4**

(22) Anmeldetag: **02.02.87**

(54) Wärmetauschersystem mit einem Querstromlüfter.

(30) Priorität: **03.02.86 AT 254/86**

(43) Veröffentlichungstag der Anmeldung:
**19.08.87 Patentblatt 87/34**

(45) Bekanntmachung des Hinweises auf die Patenterteilung:
**24.10.90 Patentblatt 90/43**

(84) Benannte Vertragsstaaten:
**DE FR GB**

(56) Entgegenhaltungen:
EP-A- 0 045 087
EP-A- 0 067 884
DE-A- 1 476 332
DE-U- 8 236 325
US-A- 3 209 989
US-A- 3 325 089
US-A- 3 813 184
US-A- 4 519 343
US-A- 4 539 943

PATENT ABSTRACTS OF JAPAN, Band 7,
Nr. 240 (M-251)[1385], 25. Oktober 1983; &
JP-A-58 128 497 (MATSUSHITA DENKI SANGYO
K.K.) 01-08-1983

(73) Patentinhaber: **AVL Gesellschaft für
Verbrennungskraftmaschinen und Messtechnik
mbH.Prof.Dr.Dr.h.c. Hans List, Kleiststrasse 48,
A-8020 Graz(AT)**

(72) Erfinder: **Thien, Gerhard, Dipl.-Ing Dr.,
Stiftingtalstrasse 71, A-8010 Graz(AT)**
Erfinder: **Van Hofe, Rüdiger, Dipl.-Ing,
Rembrandtgasse 2, A-8010 Graz(AT)**
Erfinder: **Osterloh, Gerd, Krottendorferstrasse 53,
A-8052 Graz(AT)**

(74) Vertreter: **Krause, Walter, Dr. Dipl.-Ing. et al,
Postfach 200 Singerstrasse 8, A-1010 Wien(AT)**

## Beschreibung

Die Erfindung bezieht sich auf ein Wärmetauschersysteme, bestehend aus einem Querstromlüfter mit einem Laufrad, einem Leitblech, das dieses Laufrad teilweise umgibt, und einem Austrittsgehäuse, das zusätzlich von einer in einer Zunge endenden Trennwand zwischen Eintritts- und Auslaßkanal und zwei an den axialen Enden dieser Trennwand angeordneten Seitenteilen gebildet ist, und an das ein Wärmeübertrager anschließt, wobei die Achse des Laufrades in der Projektion senkrecht auf die Höhenerstreckung des Wärmeübertragers im Mittelbereich der Höhenerstreckung angeordnet ist und die Höhe des Ausströmquerschnittes des Austrittsgehäuses, an den der Wärmeüberträger anschließt, gleich der Höhe H des Wärmeübertragers ist.

Ein Wärmetauschersystem dieser Art ist in der DE-U 8 236 325 beschrieben. Dieses geht von vorbekannten Querstromlüftern aus, die in der Regel eine Ausblasöffnung mit verhältnismäßig geringem Ausblasquerschnitt aufweisen und daher nicht geeignet sind, größere Geräte, z.B. einen Radiator, mit dem von ihm erzeugten Luftstrom gleichmäßig zu bestreichen. Dabei soll durch eine spezielle Formgebung des Gehäuses, insbesondere der Zungenform und der Trennwand zwischen Saug- und Druckraum, ein besserer Wirkungsgrad des Diffusors erreicht werden, wobei durch diesen Diffusor die Strömung im Austritt über einen größeren Querschnitt verteilt und ein entsprechend breiter Wärmeübertrager (Radiator) gleichmäßig angeströmt werden soll.

Die praktische Erfahrung hat indes aber gezeigt, daß dabei aufgrund der großen Turbulenz beim Austritt aus dem Laufrad bzw. Eintritt in den Diffusor sowie die an dieser Stelle, quer zur Strömung betrachtet, sehr ungleich großen mittleren Strömungsgeschwindigkeiten, nur ein sehr schlechter Diffusorwirkungsgrad, d.h. nur ein sehr geringer Druckaufbau, erreichbar ist. Abgesehen davon, ist im Verhältnis zum Durchmesser des Laufrades die Höhe des Radiators nicht entscheidend größer und der Abstand des Radiators vom Laufrad relativ groß, sodaß dieser Querstromlüfter für Anwendungsfälle, bei welchen ein geringer Platzbedarf Voraussetzung ist, nicht einsetzbar ist.

Aufgabe der Erfindung ist es, diese Nachteile des bekannten Systems zu vermeiden und ein Wärmetauschersystem zu schaffen, das bei äußerst platzsparender Bauweise eine weitgehend gleichmäßige Durchströmung des Wärmeübertragers, einen hohen Wirkungsgrad und eine geringe Geräuschentwicklung erreicht.

Die Erfindung besteht darin, daß im Inneren des Laufrades des Querstromlüfters mindestens eine feststehende Strömungsleitschaufel angeordnet ist, die sich im Bereich zwischen der Zunge des Austrittsgehäuses und der Laufradachse befindet und zur Laufradachse hin konvex ist, und daß die Höhe des Ausströmquerschnittes des Austrittsgehäuses, an den der Wärmeübertrager anschließt, bezogen auf den Durchmesser D des Laufrades, größer als 1,5 D und der Abstand A des Wärmeübertragers vom Laufrad kleiner als 0,5 D ist.

Wenn man die charakteristischen Kennwerte für das erfindungsgemäße System mit den im Sonderdruck der ATZ Automobiltechnische Zeitschrift 86 (1984), Seiten 161 bis 169 angegebenen optimal erreichbaren Werten von konventionellen Wärmetauschersystemen vergleicht, so sieht man, daß die erfindungsgemäße Bauart hinsichtlich Wirkungsgrad und spezifischer Schalleistung gleichwertig mit optimierten Axiallüftersystemen ist. Im Vergleich zu Ergebnissen mit bisherigen Querstromlüftersystemen nach dem Sonderdruck ATZ 87 (1985) 4 ist überraschend ein erheblicher Fortschritt hinsichtlich Wirkungsgrad und aufgrund der Verschiebung des optimalen Betriebspunktes (kleinster spezifischer Schalleistungspegel bzw. höchster Wirkungsgrad) zu höherer Lieferziffer ein kleinerer Laufraddurchmesser, gegeben, ganz abgesehen von dem, bezogen auf den Laufraddurchmesser D, äußerst kurzen Abstand A des Wärmeübertragers vom Laufrad.

Aufgrund negativer Erfahrungen mit diffusorartigen Austrittskanälen von Querstromlüftern, und zwar auch bei Einbau von Leitschaufeln und Unterteilungen, war es in keiner Weise naheliegend, daß bei einem, wie im vorliegenden Fall, sich extrem erweiternden Austrittskanal, sich eine ausreichend gleichmäßige Durchströmung des Wärmeübertragers einstellen könnte. Es war vielmehr eine Überraschung, als im praktischen Versuch mit der erfindungsgemäßen Ausbildung ausgezeichnete aerodynamische und akustische Ergebnisse erreicht wurden.

Die DE-A 1 476 332 beschreibt zwar eine kompakte Kombination von Querstromlüfter mit einem druckseitig angeordneten Wärmeübertrager, wobei offenbar das Höhenverhältnis H/D und der Abstand A/D innerhalb der im oben zitierten Schutzbegehren angegebenen Grenzen liegen kann. Darüber hinaus unterscheidet sich der Erfindungsgegenstand jedoch wesentlich im Aufbau und in der Wirkungsweise vom Gegenstand der DE-A 1 476 332. So ist beim beschriebenen bekannten Wärmetauschersystem die Achse des Gebläses am Ende des durchströmten Teiles des Wärmetauschers angeordnet, wogegen gemäß der Erfindung die Achse des Gebläses sich im Mittelbereich der Höhe des Wärmeübertragers befindet. Eine Zunge sowie eine feststehende Strömungsleitschaufel im Inneren des Laufrades sind beim Wärmetauschersystem nach dem Vorhalt nicht vorhanden.

Versuche des Anmelders haben ergeben, daß durch den Einbau der Leitschaufel eine Steigerung des Wirkungsgrades von 0,21 auf 0,29, also um fast 40% erreicht werden kann, wobei dann durch weitere Optimierung von Zungenform, Gehäuseform und Wärmetauscherposition schließlich ein Wirkungsgrad von 0,39 erreichbar war.

In weiterer Ausgestaltung der Erfindung kann im Inneren des Laufrades eine einzige Strömungsleitschaufel vorgesehen sein, die sich quer zu ihrer Längserstreckung bis etwa zum Grundzylinder der Beaufschlagung des Laufrades erstreckt. Während durch die Formgebung von Laufrad, Leitblech, Austrittsgehäuse sowie Trennwand zwischen Ein- und Austrittskanal bereits eine unerwartet günstige Durchströmung des Wärmeübertragers erreicht wird, ergibt sich durch diese einzige Leitschaufel im Inneren des Laufrades eine überraschend große Anhebung des Wirkungsgrades bei gleichzeitiger Verringerung des spezifischen Geräusches.

In weiterer Ausgestaltung der Erfindung ist es möglich, daß im Austrittsgehäuse eine Strömungsleitschaufel vorgesehen ist, die sich im Raum zwischen Trennwand und Wärmeübertrager befindet, mit ihren Schenkeln einen Winkel von etwa 90° bildet und – in Strömungsrichtung gesehen – mit ihrer Vorderkante etwa unterhalb der Vorderkante der Trennwand angeordnet ist. Dadurch wird im Austrittsgehäuse, insbesondere bei Wärmeübertragern mit kleineren Widerstandsbeiwerten, eine noch gleichmäßigere Aufteilung der Strömung über den gesamten Abströmquerschnitt bei kleinsten Strömungsverlusten erreicht.

In weiterer Ausgestaltung der Erfindung kann eine Sekundärluftzuführung vorgesehen sein, die an der engsten Stelle zwischen dem Laufrad und der Zunge des Austrittsgehäuses mündet. Diese Einrichtung hat zwar auf die aerodynamischen Kennwerte des Systems kaum einen Einfluß, sie bewirkt aber, daß einer der wesentlichen Anteile des Lüftergeräusches, nämlich der Drehklang (das sind die Töne mit der Frequenz Laufschaufelzahl mal sekundliche Drehzahl und deren Vielfache) nicht nur im Optimalpunkt, sondern über einen grossen Bereich der Kennlinien niedrig bleibt.

Im Hinblick auf die Möglichkeit einer Staudrucknutzung bei Anwendung des erfindungsgemäßen Wärmetauschersystems zur Kühlung von Fahrzeug-Brennkraftmaschinen ist festzustellen, daß der Querstromlüfter bei ausgeschaltetem Antrieb dem Staudruck wesentlich mehr Widerstand entgegensetzt als Axiallüfter oder Radiallüfter konventioneller Art. Dies u.a. deshalb, weil der Querstromlüfter, wenn er bei Abschaltung frei laufen gelassen wird, entgegengesetzt der normalen Antriebsdrehrichtung läuft. In Weiterbildung der Erfindung ist deshalb eine Blockiereinrichtung für das Laufrad, die bei abgeschaltetem Antrieb des Laufrades wirksam ist, vorgesehen.

Eine weitere Verbesserung der Staudrucknutzung wird bei einer anderen Ausbildungsform gemäß der Erfindung dadurch erreicht, daß bei Abschaltung des Laufradantriebes noch ein ganz leichter Antrieb in normaler Antriebsdrehrichtung erhalten bleibt. In diesem Falle überwiegt leistungsmäßig die Verbesserung der Staudrucknutzung den gegenüber der Nennleistung vernachläßigbaren Leistungsaufwand für den Antrieb des Laufrades. Ein solches Mitdrehen des Lüfters wird z.B. bei Verwendung einer sogenannten Visconabe, wie sie heute bei Axiallüftersystemen sehr häufig ist, erreicht. Eine vollständige Kupplung des Lüfters ergibt sich dabei erst bei Überschreiten einer bestimmten Temperatur, während darunter ein leichtes Mitdrehen bewirkt wird.

Eine weitere Verbesserung im Sinne der Erfindung kann dadurch erreicht werden, daß die Trennwand zwischen Eintritts- und Auslaßkanal und/oder die Strömungsleitschaufel im Austrittsgehäuse um eine zur Laufradachse parallele Achse drehbar ist.

Dabei kann die Trennwand zwischen Eintritts- und Auslaßkanal und ggf. die Strömungsleitschaufel im Austrittsgehäuse, um eine Achse im Bereich der Zunge des Austrittsgehäuses drehbar sein. Der der Staudruckausnutzung entgegenwirkende Widerstand läßt sich auf diese Weise auf die Größenordnung herabsetzen, wie er bei Axiallüfter- oder Radiallüftersystemen gegeben ist.

Beim Einbau des erfindungsgemäßen Wärmetauschersystems in ein Fahrzeug ist es vorteilhaft, wenn die Achse des Laufrades quer zur Fahrzeuglängsrichtung und der Kühler mindestens zum Teil unterhalb des Querstromlüfters angeordnet ist. Es kann dabei gegenüber konventionellen Motorkühlsystemen eine merkliche Absenkung des Vorderteiles der Motorhaube erreicht werden.

Die Erfindung wird nachfolgend anhand der Zeichnungen näher erläutert. Es zeigen

Figur 1 ein erfindungsgemäßes Wärmetauschersystem in schematischer Darstellung und Schnitt vertikal zur Achse des Läufers mit Darstellung des Strömungsverlaufes,

Figur 2 den Verlauf der Austrittsströmung bei einem erfindungsgemäßen Wärmetauschersystem bei Verwendung von Wärmeübertragern mit unterschiedlichem Widerstandsbeiwert,

Figur 3 ein Ausführungsbeispiel gemäß der Erfindung mit Austrittsleitschaufel und Sekundärluftzuführung samt Darstellung der Austrittsströmung,

Figur 4a bis 4c den Verlauf der aerodynamischen Kennwerte einer Ausführung gemäß der Erfindung im Vergleich zu jenen eines bekannten Wärmetauschersystems,

Figur 5 eine Variante der Ausführung nach Fig. 3,

Figur 6 und 7 eine beispielsweise konstruktive Ausbildung der Ausführung gemäß Fig. 2 und zwar in Fig. 6 im Schnitt vertikal zur Achse des Läufers und in

Figur 7 im Schnitt nach der Linie VII-VII in Fig. 6,

Figur 8 den Einbau eines erfindungsgemäßen Wärmetauschersystems zusammen mit einer Brennkraftmaschine in ein Kraftfahrzeug schematisch im Schnitt vertikal zur Achse des Läufers und

Figur 9 einen gegenüber der Ausführung nach Fig. 8 etwas geänderten Einbau des Wärmetauschersystems.

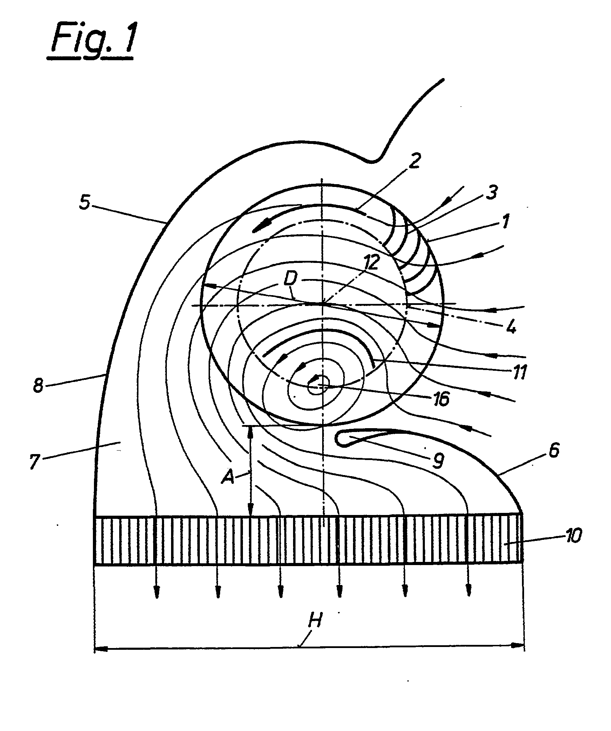

Das in Fig. 1 dargestellte erfindungsgemäße Wärmetauschersystem weist einen Querstromlüfter auf, der aus einem walzenförmigen Laufrad 1, das am Umfang mit in Drehrichtung gemäß Pfeil 2 vorwärts gekrümmten Laufschaufeln 3 bestückt ist. Der Grundzylinder der Beschaufelung ist mit 4 bezeichnet. Weiters weist der Querstromlüfter ein Leitblech 5 auf, welches das Laufrad 1 teilweise umgibt und zusammen mit der Trennwand 6 zwischen dem Zuströmraum und dem Abströmraum und den beiden an den axialen Enden von Leitblech 5 und Trennwand 6 angeordneten Seitenteilen 7 das Austrittsgehäuse 8 bilden. Die Trennwand 6 weist an ihrer dem Laufrad 1 zugewandten Seite eine Zunge 9 auf, welche im Querschnitt strömungsgünstig etwa tropfenförmig ausgebildet ist. Das Austrittsgehäuse 8 schließt an den Wärmeübertrager 10 an, der z.B. der Wasserrückkühler einer Brennkraftmaschine sein kann.

Innerhalb des Laufrades 1 ist eine feststehende Strömungsleitschaufel 11 angeordnet, die sich über die gesamte Länge des Laufrades 1 und etwa bis zum Grundzylinder 4 der Beschaufelung erstreckt. Die Strömungsleitschaufel 11 befindet sich im Bereich zwischen der Achse 12 des Laufrades 1 und der Zunge 9 und ist zur Achse 12 hin konvex.

Aus dem Verlauf der in Fig. 1 eingezeichneten Stromlinien im Inneren des Laufrades 1 ist ersichtlich, daß das Laufrad zweimal durchströmt wird und sich in der Nähe der Zunge 9 ein Wirbel 16 ausbildet, welcher einen gekrümmten Verlauf der Stromlinien im Inneren des Laufrades 1 bewirkt. Dieser ist Voraussetzung dafür, daß die Strömung beim zweiten Eintritt in den Laufschaufelbereich, also beim Durchtritt von innen nach außen, mit ihrer Strömungsrichtung relativ zum Laufrad mit der Richtung der Laufschaufeln übereinstimmt. Dieser Strömungswirbel 16 wird in Richtung zur Achse 12 des Laufrades 1 hin durch die Strömungsleitschaufel 11 begrenzt.

Bezogen auf den Laufraddurchmesser D ist der Abstand A zwischen Laufrad 1 und Wärmeübertrager 10 äußerst gering, nämlich kleiner als 0,5 D und die sehr große Höhe H des Wärmeübertragers ist größer als 1,5 D. Trotz dieser extremen Abmessungen wird eine gleichmäßige Durchströmung des Wärmeübertragers 10 sowie ein guter Wirkungsgrad und ein geringes Geräusch erzielt, was durch die geordnete Strömung und geringen Strömungsverluste, welche auf die erfindungsgemäßen Maßnahmen zurückgehen, erklärbar ist.

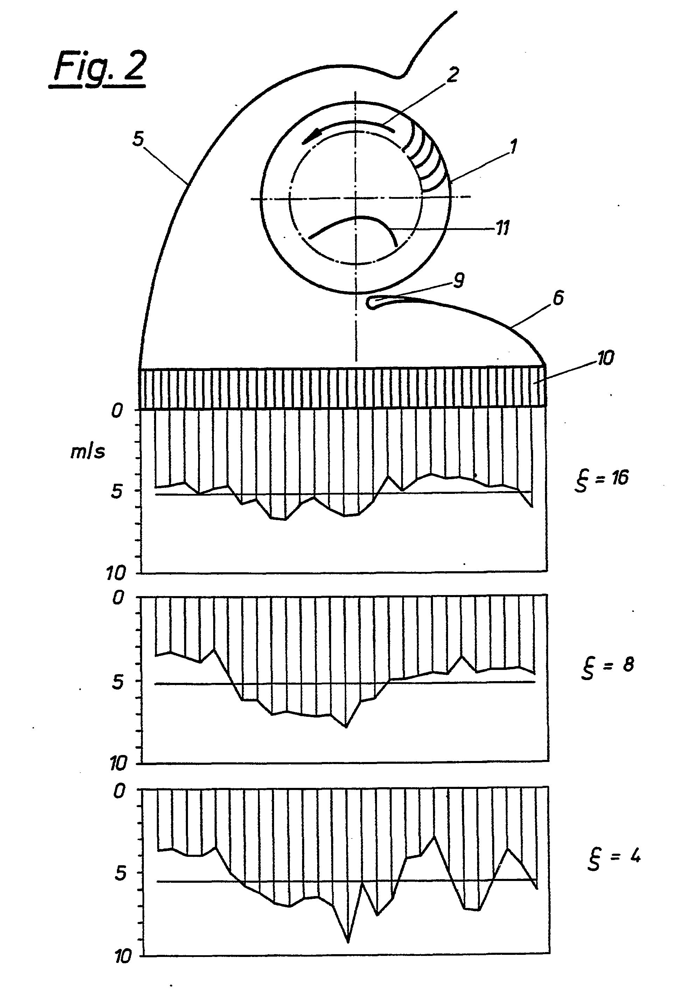

Zur näheren Erläuterung der Wirkungsweise des erfindungsgemäßen Wärmetauschersystems ist in Fig. 2 das Geschwindigkeitsprofil der Durchströmung des Wärmeübertragers 10 dargestellt, und zwar bei Verwendung von Wärmeübertragern mit unterschiedlichem Widerstandsbeiwert $\xi$. Das obere Diagramm mit der ausgezeichnet gleichmäßigen Durchströmung wurde auf einem Wärmeübertrager erhalten, wie er für die Motorkühlung bei leistungsfähigen PKW zur Anwendung kommt. Wie man sieht, wird die Durchströmung bei kleineren Widerstandsbeiwerten ungleichmäßiger.

Sie ist aber, wie das untere Diagramm zeigt, auch bei Wärmeübertragern, deren Widerstandsbeiwert $\xi$ nur ein Viertel des vorhin beschriebenen beträgt, noch in einem durchaus brauchbaren Rahmen.

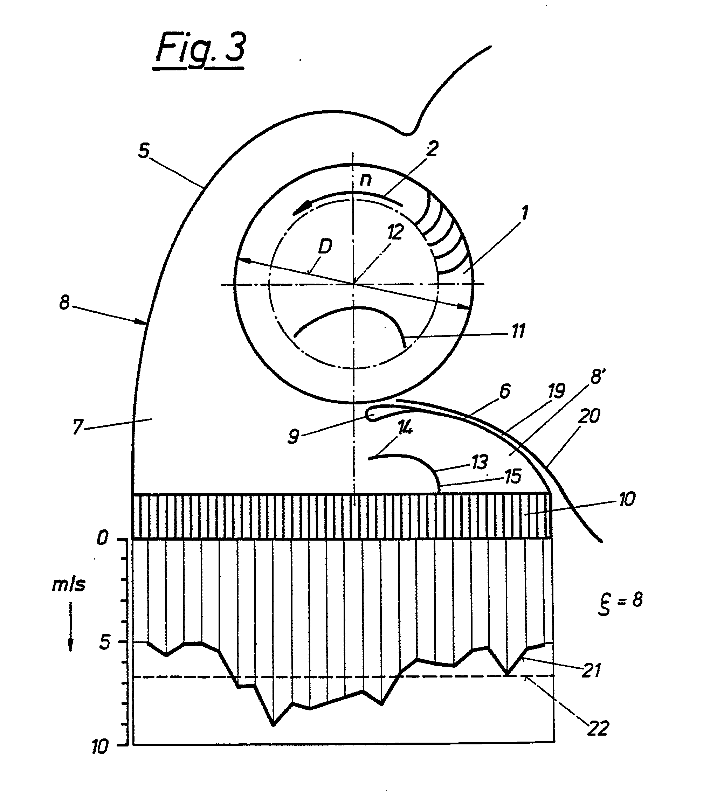

Bei der in Fig. 3 dargestellten Ausführungsvariante gemäß der Erfindung ist im Bereich zwischen der Trennwand 6 bzw. deren Zunge 9 und dem Wärmeübertrager 10 eine weitere Strömungsleitschaufel 13 angeordnet, deren Schenkel 14 und 15 einen Winkel von etwa 90° einschließen und deren, in Strömungsrichtung gesehen, Vorderkante mit der Zunge 9 den Einströmquerschnitt des Teils 8' des Austrittsgehäuses 8 begrenzen. Dieser Teil 8' des Austrittsgehäuses 8 ist ausschließlich dem im Bilde rechten Teil des Wärmeübertragers 10, der z.B. 10 bis 30 % der gesamten Höhe des Wärmeübertragers betragen kann, zugeordnet. Es ist auch noch ein Sekundärluftkanal 19 vorgesehen, welcher zwar an den günstigen Durchströmungsverhältnissen am Wärmeübertrager 10 kaum etwas ändert, jedoch eine erhebliche Verbesserung bei der Geräuschentwicklung bewirkt. Zur Bildung des Sekundärluftkanals 19, welcher an der engsten Stelle zwischen Laufrad 1 und Zunge 9 in das Austrittsgehäuse mündet, ist neben der Trennwand 6 eine weitere Wand 20, welche sich im Abstand von ersterer befindet, angeordnet. Der Eintritt in den Sekundärluftkanal kann, wie in Fig. 3 dargestellt, vom Raum hinter dem Wärmeübertrager, aber auch durch eine Öffnung in der Trennwand 6 vom Abströmraum her erfolgen.

Der Verlauf der Austrittsgeschwindigkeit entlang der Höhe des Wärmeübertragers 10 ist auch hier wieder dargestellt (Kurve 21). Er gilt für einen Wärmeübertrager mit einem mittleren Widerstandsbeiwert $\xi = 8$. Wie sich ein Vergleich mit den Diagrammen in Fig. 2 zeigt, wird durch die zusätzliche Anordnung der Strömungsleitschaufel 13 im Austrittsgehäuse die Abweichung von der durchschnittlichen Geschwindigkeit (hier durch die gestrichelte Linie 22 dargestellt) verringert und damit ein Weg gewiesen, auch bei mittleren und vor allem kleinen Widerstandsbeiwerten des Wärmeübertragers eine gleichmäßige Durchströmung zu gewährleisten.

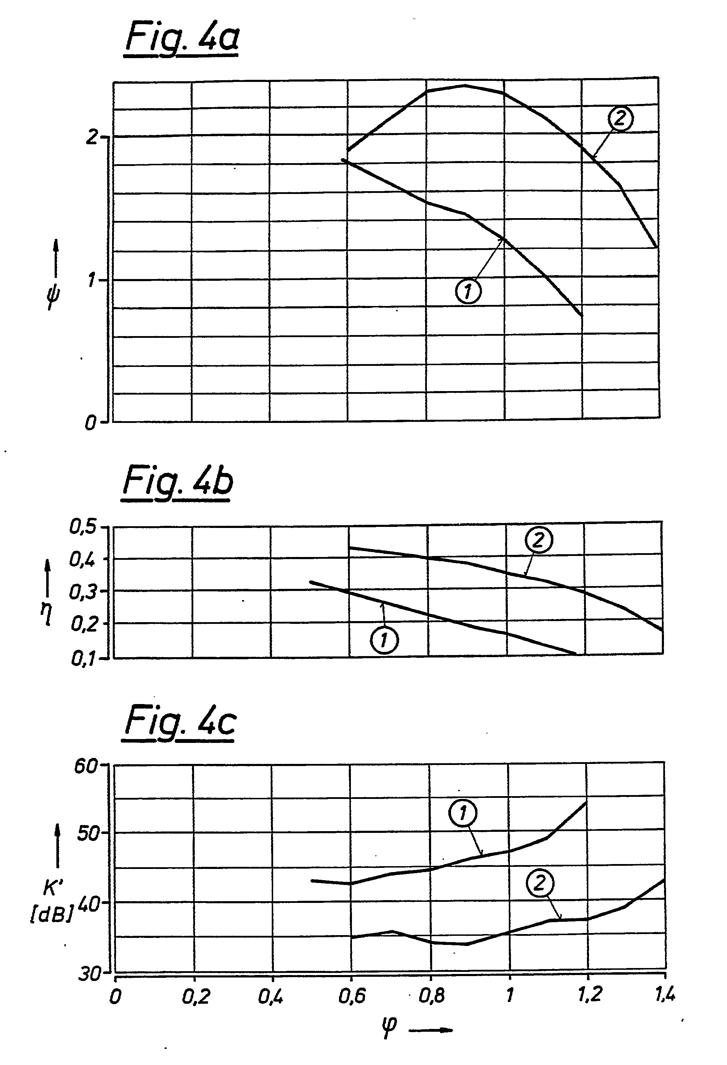

Aus Fig. 4 ist neben dem Verlauf der aerodynamischen Kennwerte auch der Verlauf des spezifischen Schalldruckpegels K' [dB] einer vermessenen Versuchsausführung eines Wärmetauchersystems gemäß der Erfindung wiedergegeben. Die sich auf diese Versuchsausführung beziehenden Kurven sind mit Nr. 2 bezeichnet. Zum Vergleich dazu sind die entsprechenden Werte einer vergleichbaren konventionellen Ausführung eines Wärmetauschersystems eingetragen. Bei dieser konventionellen Anlage war der Wärmeübertrager angeordnet und die Länge des druckseitigen an sich konventionellen Diffusors war dabei gleich dem Durchmesser D des Laufrades. Die sich auf diese Vergleichsanlage beziehenden Kennwerte sind mit Nr. 1 bezeichnet. Die Kennwerte sind in Fig. 4 über einen größeren Bereich der Lieferziffer $\phi$ angegeben und zwar im Diagramm a) die Druckziffer $\psi$, im Diagramm b) der Wirkungsgrad $\eta$ und im Diagramm c) der spezifische Schalldruckpegel K' [dB]. Man sieht, daß sowohl die Druckziffer und der Wirkungsgrad bei dem weitgehend optimierten, zum Vergleich herangezogenen konventionellen Wärmetauschersystem mit Querstromlüfter sowohl die Druckziffer als auch der Wirkungsgrad erheblich niedriger sind und auch der spezifische Schalldruckpegel erheblich höher ist. Der spezifische Schallpegel K' des erfindungsgemäßen Querstromlüftersystems zeigt zudem über einen größeren Bereich der Lieferziffer $\phi$ wenig Anstieg.

Eine nähere Erklärung der Kennwerte kann den vorher bereits genannten Sonderdruck der ATZ 86 (1984) und ATZ 87 (1985) entnommen werden. Der spezifische Schalldruckpegel K' in Fig. 4c) ist allerdings nur ein Relativmaß, er weicht um eine konstante Größe, die bei den zugrundegelegten Versuchen nicht bestimmt werden konnte, von dem spezifischen Schalleistungspegel K ab.

Der Wirkungsgrad $\eta$ des erfindungsgemäßen Querstromversuchslüfters, der definiert ist durch das Verhältnis zwischen geförderter Luftmenge mal Druckverlust im Wärmeübertrager bei völlig gleichmäßiger Durchströmung und der Antriebsleistung des Lüfterlaufrades, betrug 0,41. Er beinhaltet den Verlust durch ungleiche Durchströmung und vor allem den Verlust der Geschwindigkeitsenergie der Austrittsströmung aus dem Wärmeübertrager. Der Versuchslüfter wies ein sehr schmales Laufrad auf (axiale Länge L kleiner als der Durchmesser D des Laufrades), wodurch der Wandreibungseinfluß in den Strömungsverlusten relativ hoch ist. Bei den in der Praxis vorkommenden Laufradabmessungen mit axialen Längen von zwei- bis dreimal dem Laufraddurchmesser D würde der Wirkungsgrad $\eta$ anstatt 0,41 etwa 0,45 betragen. Bedenkt man, daß bei Querstromlüftern aufgrund des Energieaufwandes für den die Durchströmung unterstützenden Wirbel ein Gesamtwirkungsgrad, der die Geschwindigkeitsenergie beim Austritt noch als Nutzeffekt beinhaltet, von etwa 67 % erreichbar ist, dann sind Wirkungsgrade im aerodynamischen Bestpunkt von 45 bis 50 % nach der hier getroffenen Definition an der oberstern Grenze des Möglichen.

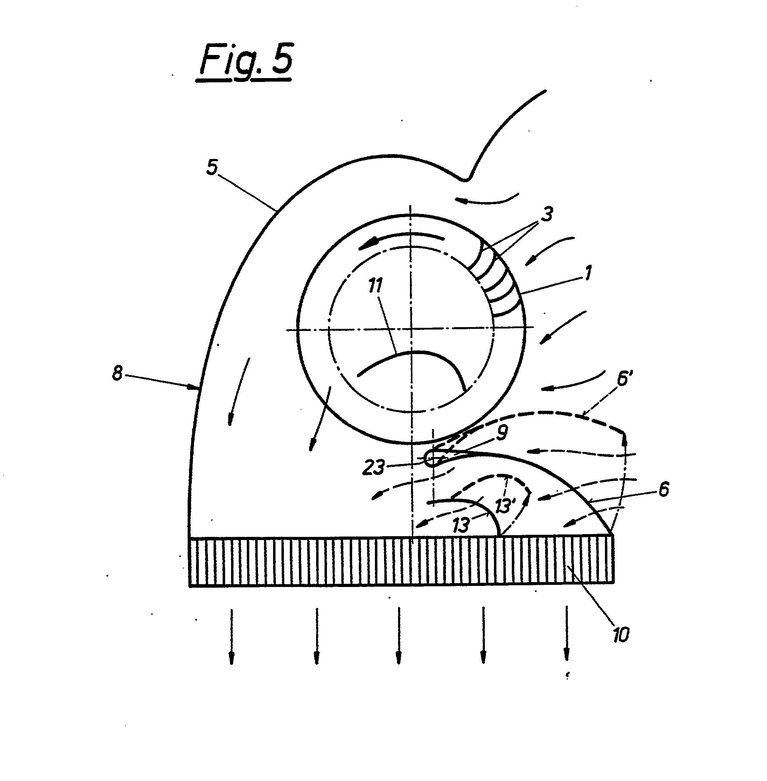

Bei der in Fig. 5 gezeigten Ausführung handelt es sich um eine Variante, bei welcher der der Staudruckausnutzung entgegenwirkende Widerstand durch Drehung der Trennwand 6 um eine im Bereich der Zunge 9 gelegene Achse 23 herabgesetzt werden kann. Die Stellung der Trennwand 6 nach einer maximalen Verdrehung ist gestrichelt eingezeichnet und mit dem Bezugszeichen 6' versehen. Es ist zweckmäßig, wenn dabei, wie in Fig. 5 ebenfalls gezeigt, die ggf. vorgesehene Strömungsleitschaufel 13 im Austrittsgehäuse 8 auch mitbewegt wird. Die verdrehte Stellung der Strömungsleitschaufel 13 ist ebenfalls gestrichelt dargestellt und mit 13' bezeichnet. Die in Fig. 5 gestrichelt eingezeichneten Pfeile zeigen den sich nach Verdrehung der Trennwand 6 und der Strömungsleitschaufel 13 in die gestrichelten Stellungen ergebenden Strömungsverlauf. Man sieht, daß Luft ohne größeren Widerstand von der Zuströmseite zur Abströmseite hin überströmen kann.

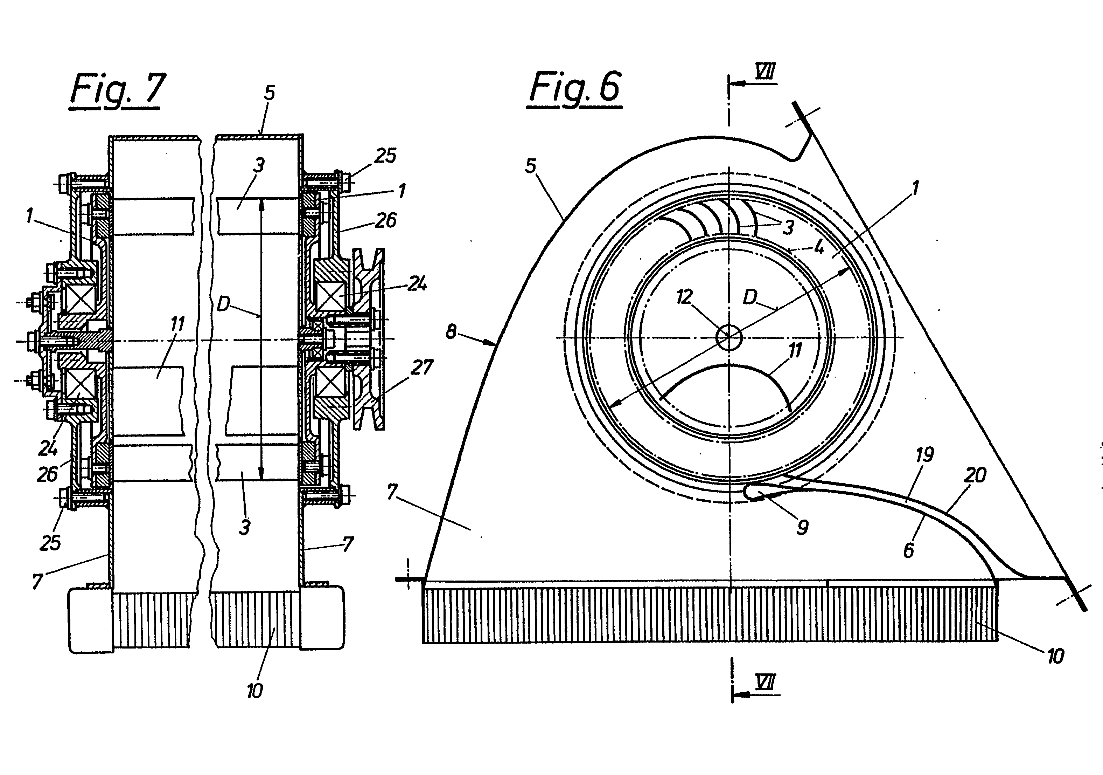

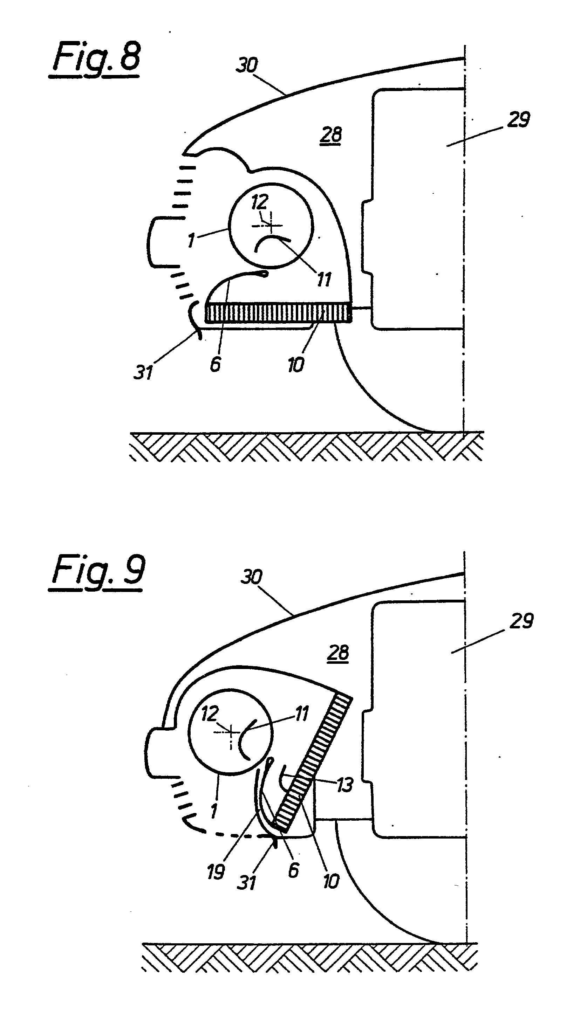

Die in den Fig. 6 und 7 dargestellte Ausführungsform gemäß der Erfindung ist eine Prototyp-Versuchsausführung und entspricht der in Fig. 2 schematisch dargestellten Ausführungsform mit zusätzlicher Anordnung des in Fig. 3 gezeigten Sekundärluftkanals, Gleiche Teile sind deshalb mit denselben Bezugszeichen versehen. Die konstruktive Ausführung ist gegenüber einer Serienausführung aufgrund der einfacheren Herstellbarkeit einerseits und der in der Entwicklungsphase erforderlichen Möglichkeit zur Veränderung im Aufbau andererseits relativ kompliziert. In einer Großserie würden z.B. Blechpreßteile, Leichtmetallgußteile und ggf. Kunststoffteile, zur Anwendung kommen.

Das Laufrad 1 ist in den Seitenteilen 7 beidseitig mittels der Wälzlager 24 gelagert, und zwar über an den Seitenteilen 7 mittels Schrauben 25 befestigte Lagerschrauben 26. Der Antrieb des Laufrades 1 erfolgt über die an diesem befestigten Keilriemenscheibe 27.

Die Seitenteile 7 sowie das Leitblech 5 und die Trennwand 6 zwischen Einström- und Abströmteil bilden das Austrittsgehäuse 8, an welches der Wärmetauscher 10 angeflanscht ist. Dieses Austrittsgehäuse 8 wird von der Strömungsleitschaufel 11 in Richtung der Achse 12 des Laufrades 1 durchsetzt und ist mit dieser Leitschaufel fest verbunden.

Die Fig. 8 und 9 zeigen Einbaubeispiele für das erfindungsgemäße Wärmetauschersystem im Zusammenhang mit einem Fahrzeug 28, das von einer Brennkraftmaschine 29 angetrieben ist und bei denen der Wärmeübertrager 10 des Wärmetauschersystems den Kühlwasserrückkühler der Brennkraftmaschine bildet. Bei beiden Ausführungsbeispielen steht die Achse 12 des Laufrades 1 des Querstromlüfters quer zur Längsachse des Fahrzeuges und das Wärmetauschersystem ist im Vorderteil und unterhalb der Motorhabe 30 angeordnet. Die beiden Ausführungsbeispiele unterscheiden sich zunächst dadurch, daß der Wärmeübertrager 10 in Fig. 8 horizontal und bei zweiten Ausführung (Fig. 9) in einem spitzen Winkel zur Horizontalen angeordnet ist. Des weiteren hat der Wärmeübertrager 10 in der zweiten Ausführung eine relativ zum Laufraddurchmesser D größere Höhe H und einen niedrigeren Widerstandsbeiwert $\xi$. Eine ansonsten bei niedrigerem Widerstandsbeiwert etwas ungleichmäßigere Durchströmung wird durch die Leitschaufel 13 im Austrittsgehäuse vermieden. Der Sekundärluftkanal 19 sorgt bei der zweiten Ausführung nach Fig. 9 für optimalstes Geräuschverhalten.

In beiden Ausführungen ist am Beginn des Fahrzeugbodens ein kleiner Spoiler 31 angedeutet, der den durch den Fahrtwind im vorderen Bodenbereich entstehenden Unterdruck verstärkt und dadurch die Abströmung der Kühlluft unterstützt.

Das Vorderteil der Motorhaube 30 konnte gegenüber einer konventionellen Ausführung beim ersten Beispiel etwas und beim zweiten Beispiel noch merklich abgesenkt und abgerundet werden. Die erfindungsgemäße Ausführung des Wärmetauschersystems wirkt sich also bei der Anwendung als Motorkühlsystem bei Personenkraftwagen nicht nur funktionell günstig aus, sondern beeinflußt auch die Formgebung des Kraftfahrzeuges in vorteilhafter Weise.

**Patentansprüche**

1. Wärmetauschersystem, bestehend aus einem Querstromlüfter mit einem Laufrad, einem Leitblech, das dieses Laufrad teilweise umgibt, und einem Austrittsgehäuse, das zusätzlich von einer in einer Zunge endenden Trennwand zwischen Eintritts- und Auslasskanal und zwei an den axialen Enden dieser Trennwand angeordneten Seitenteilen gebildet ist, und an das ein Wärmeübertrager anschliesst, wobei die Achse des Laufrades in der Projektion senkrecht auf die Höhenerstreckung des Wärmeübertragers im Mittelbereich der Höhenerstreckung angeordnet ist und die Höhe des Ausströmquerschnittes des Austrittsgehäuses (8), an den der Wärmeübertrager (10) anschliesst, gleich der Höhe H des Wärmeübertragers (10) ist, dadurch gekennzeichnet, dass im Inneren des Laufrades (1) des Querstromlüfters mindenstens eine feststehende Strömungsleitschaufel (11) angeordnet ist, die sich im Bereich zwischen der Zunge (9) des Austrittsgehäuses (8) und der Laufradachse (12) befindet und zur Laufradachse hin konvex ist, und dass die Höhe des Ausströmquerschnittes des Austrittsgehäuses (8), an den der Wärmeübertrager (10) anschliesst, bezogen auf den Durchmesser D des Laufrades (1), grösser als 1,5 D und der Abstand A des Wärmeübertragers (10) vom Laufrad (1) kleiner als 0,5 D ist.

2. Wärmetauschersystem nach Anspruch 1, dadurch gekennzeichnet, daß im Inneren des Laufrades (1) eine einzige Strömungsleitschaufel (11) vorgesehen ist, die sich quer zu ihrer Längserstreckung bis etwa zum Grundzylinder (4) der Beschaufelung des Laufrades (1) erstreckt.

3. Wärmetauschersystem nach Anspruch 1 oder 2, dadurch gekennzeichnet, daß im Austrittsgehäuse (8) eine Strömungsleitschaufel (13) vorgesehen ist, die sich im Raum zwischen Trennwand (6) und Wärmeübertrager (10) befindet, mit ihren Schenkeln einen Winkel von etwa 90° bildet und - in Strömungsrichtung gesehen - mit ihrer Vorderkante etwa unterhalb der Vorderkante der Trennwand (6) bzw. Zunge (9) angeordnet ist.

4. Wärmetauschersystem nach einem der Ansprüche 1 bis 3, dadurch gekennzeichnet, daß eine Sekundärluftzuführung (19) vorgesehen ist, die an der engsten Stelle zwischen dem Laufrad (1) und der Zunge (9) des Austrittsgehäuses (8) mündet.

5. Wärmetauschersystem nach einem der Ansprüche 1 bis 4, zur Kühlung von Fahrzeug-Brennkraftmaschinen, gekennzeichnet, durch eine Blockiereinrichtung für das Laufrad (1), die bei abgestelltem Antrieb des Laufrades (1) wirksam ist.

6. Wärmetauschersystem nach einem der Ansprüche 1 bis 4, zur Kühlung von Fahrzeug-Brennkraftmaschinen, dadurch gekennzeichnet, daß bei der Abschaltung des Laufradantriebes noch ein ganz leichter Antrieb in normaler Antriebsdrehrichtung erhalten bleibt.

7. Wärmetauschersystem zur Kühlung von Fahrzeug-Brennkraftmaschinen, nach einem der Ansprüche 1 bis 6, dadurch gekennzeichnet, daß die Trennwand (6) zwischen Eintritts- und Auslaßkanal und/oder die Strömungsleitschaufel (13) im Austrittsgehäuse (8) um eine zur Laufradachse (12) parallele Achse (23) drehbar ist.

8. Wärmetauschersystem nach Anspruch 7, dadurch gekennzeichnet, daß die Trennwand (6) zwischen Eintritts- und Auslaßkanal und ggf. die Strömungsleitschaufel (13) im Austrittsgehäuse (8) um eine Achse (23) im Bereich der Zunge (9) des Austrittsgehäuses drehbar ist.

9. Wärmetauschersystem nach einem der Ansprüche 5 bis 8, dadurch gekennzeichnet, daß die Achse (12) des Laufrades (1) quer zur Fahrzeuglängsrichtung und der Kühler (10) mindestens zum Teil unterhalb des Querstromlüfters angeordnet ist.

**Claims**

1. A heat exchange system comprising a cross-flow blower with a blower wheel, a baffle plate partially surrounding this wheel, and an outlet housing formed by, the baffle plate and by a partition between inlet and outlet passage ending in a tongue, and by two side walls located at the axial ends of this partition, and which connects to a heat exchanger, wherein the axis of the blower wheel in its projection, to the plane of the heat exchanger being positioned in the area of the middle of its height, and the height of the discharge cross-section of the outlet housing (8), which connects to the heat exchanger (10), equalling the height H of the heat exchanger (10), wherein one or more fixed guide vanes (11) are provided inside the wheel (1) of the cross-flow blower, which are located in the area between the tongue (9) of the outlet housing (S) and the axis (12) of the blower wheel (1), and which are convex towards this axis, and wherein the height of the discharge cross-section of the outlet housing (8) which cross-section connects to the heat exchanger (10), is larger than 1.5 D relative to the diameter D of the wheel (1), and the distance A of the heat exchanger (10) from the wheel (1) is smaller than 0.5 D.

2. A heat exchange system according to claim 1, wherein a single guide vane (11) is provided inside the blower wheel (1), at a position transverse to the longitudinal axis of the system, approximately extending as far as to the base cylinder (4) described by the blades of the wheel (1).

3. A heat exchange system according to claim 1 or 2, wherein a guide vane (13) is provided in the outlet housing (8), which is located in the space between partition (6) and heat exchanger (10), its legs forming an angle of 90° approx., and - as seen in flow direction - its front edge being positioned beneath the front edge of the partition (6), or rather, the tongue (9).

4. A heat exchange system according to any of claims 1 to 3, wherein a secondary air supply (19) is provided, whose inlet is placed at the narrowest point between the blower wheel (1) and the tongue (9) of the outlet housing (8).

5. A heat exchange system according to any of claims 1 to 4, for the cooling of internal combustion engines in automotive vehicles, wherein a blocking mechanism is provided for the blower wheel (1), which is effective when the wheel drive is switched off.

6. A heat exchange system according to any of claims 1 to 4, for the cooling of internal combustion engines in automotive vehicles, wherein a very slight actuation of the blower wheel (1) in the normal direction of rotation is maintained even when the wheel drive has been switched off.

7. A heat exchange system according to any of claims 1 to 6, for the cooling of internal combustion engines in automotive vehicles, wherein the partition (6) between inflow and outflow chamber and/or the guide vane (13) in the outlet housing (8) is rotatable about an axis (23) parallel to the axis (12) of the blower wheel (1).

8. A heat exchange system according to claim 7, wherein the partition (6) between inflow and outflow chamber and/or the guide vane (13) in the outlet housing (8) is rotatable about an axis (23) in the area of the tongue (9) of the outlet housing (8).

9. A heat exchange system according to any of claims 5 to 8, wherein the axis (12) of the blower wheel (1) is positioned at right angles to the longitudinal axis of the vehicle, and the radiator (10) is placed at least partly underneath the cross-flow blower.

## Revendications

1.- Système d'échange de chaleur comportant un ventilateur à flux transversal pourvu d'un rotor, d'une tôle de guidage qui entoure partiellement ce rotor et d'un carter de sortie, qui est formé en plus par une cloison de séparation, se terminant en un déflecteur entre le canal d'entrée et le canal de sortie et par deux éléments latéraux montés aux extrémités axiales de cette cloison de séparation, relié à un récupérateur de chaleur, l'axe du rotor se projetant perpendiculairement au milieu de la hauteur du récupérateur et la hauteur de la section du flux de sortie du carter de sortie (8), section à laquelle se raccorde le récupérateur de chaleur (10) étant égal à la hauteur H du récupérateur de chaleur (10), caractérisé en ce qu'à l'intérieur du rotor (1) du ventilateur à flux transversal, est montée au moins une aube directrice de flux, (11) fixe, qui se trouve dans la zone comprise entre le déflecteur (9) du carter de sortie (8) et l'axe (12) du rotor, aube convexe par rapport à l'axe du rotor, et en ce que la hauteur H de la section de flux de sortie du carter de sortie (8), section à laquelle se raccorde le récupérateur (10), par rapport au diamètre D du rotor (1), est supérieur à 1,5 D et la distance A qui sépare le récupérateur (10) et le rotor (1) est inférieure à 0,5 D.

2.- Système d'échange de chaleur selon la revendication 1, caractérisé en ce qu'à l'intérieur de le rotor (1) est prévue une unique aube directrice du flux (11), qui s'étend transversalement par rapport à son extension longitudinale, jusqu'à peu près au cylindre de base (4) de l'aubage du rotor (1).

3.- Système d'échange de chaleur selon la revendication 1 ou 2, caractérisé en ce qu'une aube directrice du flux (13) est prévue dans le carter de sortie (8) dans l'espace compris entre la cloison de séparation (6) et le récupérateur de chaleur (10) et forme par ses branches un angle d'à peu près 90° et (vue dans la direction du flux), l'aube directrice est disposée de façon à présenter son bord antérieur à peu près au-dessous du bord antérieur de la cloison de séparation (6) ou du déflecteur (9).

4.- Système d'échange de chaleur selon l'une des revendications 1 à 3, caractérisé par une amenée d'air secondaire (19), qui débouche à l'endroit le plus étroit entre le rotor (1) et le déflecteur (9) du carter de sortie (8).

5.- Système d'échange de chaleur selon l'une des revendications 1 à 4, pour le refroidissement de moteurs à combustion interne de véhicules, caractérisé par un dispositif de blocage prévu pour le rotor (1), qui agit lorsque l'entraînement du rotor (1) est arrêté.

6.- Système d'échange de chaleur selon l'une des revendications 1 à 4, pour le refroidissement de moteurs à combustion interne de véhicules, caractérisé en ce que lors de la mise hors circuit de l'entraînement du rotor, il subsiste encore un faible entraînement dans le sens de rotation normal de l'entraînement.

7.- Système d'échange de chaleur pour le refroidissement de moteurs à combustion interne de véhicules, selon l'une des revendications 1 à 6, caractérisé en ce que la cloison de séparation (6) entre le canal d'entrée et le canal de sortie, et/ou l'aube directrice du flux (13) prévue dans le carter de sortie (8) peuvent tourner sur un axe (23) parallèle à l'axe (12) du rotor.

8.- Système d'échange de chaleur selon la revendication 7, caractérisé en ce que la cloison de séparation (6) entre le canal d'entrée et le canal de sortie, et éventuellement l'aube directrice de flux (13) dans le carter de sortie (8), peuvent tourner sur un axe (23) dans la zone du déflecteur (9) du carter de sortie.

9.- Système d'échange de chaleur selon l'une des revendications 5 à 8, caractérisé en ce que l'axe (12) du rotor (1) est disposé transversalement par rapport à la direction longitudinale du véhicule et le radiateur (10) est disposé au moins en partie au-dessous du ventilateur à flux transversal.

## Fig. 1

Fig. 2

## Fig. 3

ξ = 8

## _Fig. 4a_

## _Fig. 4b_

## _Fig. 4c_

## Fig.5

Fig.6

Fig.7

_Fig.8_

30

28

29

12

1

11

31

6

10

_Fig.9_

30

29

28

12

11

1

13

19

31

6

10